Europäisches Patentamt

European Patent Office

Office européen des brevets

(11) Veröffentlichungsnummer: **0 482 429 A2**

# EUROPÄISCHE PATENTANMELDUNG

(21) Anmeldenummer: **91117228.6**

(51) Int. Cl.⁵: **F25D 3/12**

(22) Anmeldetag: **09.10.91**

(30) Priorität: **26.10.90 DE 4034077**

(43) Veröffentlichungstag der Anmeldung:
**29.04.92 Patentblatt 92/18**

(84) Benannte Vertragsstaaten:
**AT BE CH DE DK ES FR GB IT LI NL SE**

(71) Anmelder: **Linde Aktiengesellschaft**
**Abraham-Lincoln-Strasse 21**
**W-6200 Wiesbaden(DE)**

(72) Erfinder: **Schmidtke, Wolfgang, Dipl.-Ing.**
**Packenreiterstrasse 16**
**W-8000 München 60(DE)**

(74) Vertreter: **Schaefer, Gerhard, Dr.**
**Linde Aktiengesellschaft Zentrale**
**Patentabteilung**
**W-8023 Höllriegelskreuth(DE)**

(54) **Vorrichtung zur Expansion verflüssigter Gase.**

(57) Es wird eine Vorrichtung zur Expansion eines verflüssigten Gases, z.B. zum Kühlen eines Gefrierraumes, beschrieben. Das verflüssigte Gas wird mittels einer Flüssiggasleitung 3 zu einem Stromteiler 5 geführt, der den Flüssiggasstrom in zwei Zweigleitungen 6, 7 aufteilt. Die eine Zweigleitung 6 endet in einem Gasdruckspeicher 8, während die andere Zweigleitung 7 Expansionsbohrungen 9 zum Entspannen des verflüssigten Gases aufweist. Der Gasdruckspeicher 8 sorgt dafür, daß auch nach Abschalten der Flüssiggaszufuhr das Flüssiggas in der Zweigleitung 7 auf einem Druck oberhalb des Tripelpunktes des Flüssiggases gehalten wird. Auf diese Weise wird insbesondere bei Verwendung von Kohlendioxid als Flüssiggas ein Verstopfen der Zweigleitung 7 durch gefrorenen Kohlendioxidschnee vermieden.

Die Erfindung betrifft eine Vorrichtung zum Entspannen eines verflüssigten Gases mit einer Flüssiggasleitung und mindestens einer damit in Verbindung stehenden Expansionsöffnung.

Zum Kühlen oder Gefrieren von Materialien, z.B. von Lebensmitteln, Kunststoffen etc., oder zum Ausfrieren von Schadstoffen, beispielsweise bei der Abgasreinigung, werden vielfach verflüssigte Gase als Kältemittel eingesetzt, die üblicherweise in einem Druckbehälter gespeichert werden und zum Kühlen bzw. Gefrieren entspannt werden.

So ist beispielsweise aus der DE-PS 28 17 454 eine Anordnung zum schnellen Gefrieren flüssiger oder pastöser Lebensmittel bekannt, bei der flüssiges Kohlendioxid in einen Behälter eingeleitet und am Ende der Leitung entspannt wird. Bei der Entspannung entsteht Kohlendioxidschnee, aus dem im Behälter durch Umrühren ein Bett aus Kohlendioxidschneeteilchen hergestellt wird. Das Lebensmittel wird anschließend in den Behälter eingebracht und durch Umrühren in Kontakt mit dem Kohlendioxidschnee gebracht.

Weiterhin ist es aus der US-PS 3,214,928 bekannt, das Lebensmittel an Düsen vorbeizuführen, die das Lebensmittel mit flüssigem Kohlendioxid besprühen, welches sich dabei zu Flocken von Kohlendioxidschnee verfestigt.

Die bekannten Anordnungen zum Entspannen verflüssigter Gase weisen den Nachteil auf, daß nur mit aufwendigen Konstruktionen eine gleichmäßige Verteilung des expandierten Kältemittels erreicht werden kann. Außerdem können beim Abschalten der Flüssiggaszufuhr Anlagenteile durch Vereisung verstopfen. Beim Wiedereinschalten der Flüssiggaszufuhr führen diese Verstopfungen wiederum zu einer ungleichmäßigen Verteilung des expandierten Kältemittels.

Der vorliegenden Erfindung liegt daher die Aufgabe zugrunde, eine Vorrichtung der eingangs genannten Art so auszugestalten, daß auf wirtschaftliche und zuverlässige Weise expandiertes Kältemittel bedarfsgerecht zur Verfügung gestellt werden kann.

Diese Aufgabe wird erfindungsgemäß dadurch gelöst, daß die Flüssiggasleitung mit einem Stromteiler in Verbindung steht, der den Flüssiggasstrom in zwei Zweigleitungen aufteilt, wobei die eine Zweigleitung in einem Gasdruckspeicher endet, während die andere Zweigleitung die Expansionsöffnung zum Entspannen des verflüssigten Gases aufweist.

Mit dieser Anordnung wird erreicht, daß sich bei Einschalten der Flüssiggaszufuhr der Gasdruckspeicher auflädt, während gleichzeitig Flüssiggas zur Entspannung zu den Expansionsöffnungen geleitet wird. Nach Abschalten der Flüssiggaszufuhr sorgt der Gasdruckspeicher entsprechend seinem Speichervolumen dafür, daß das noch in der zu den Expansionsöffnungen führenden Zweigleitung vorhandene Flüssiggas bis zur vollständigen Entleerung der Flüssiggasleitung in einem über dem Tripelpunkt des Flüssiggases liegenden Druckbereich gehalten wird. Dadurch wird eine Verstopfung der Anlage infolge von Vereisungen vermieden.

Vorzugsweise weist der Gasdruckspeicher einen Rippenrohrverdampfer auf. Auf diese Weise kann ohne großen apparativen Aufwand genügend Druck im Gasdruckspeicher aufgebaut werden, um das Flüssiggas, nach Abschalten der Flüssiggaszufuhr, bis zur völligen Entleerung über dem Tripelpunkt zu halten. Um den nötigen Druck sicher einhalten zu können, ist zweckmäßigerweise ein Druckmeßgerät vorgesehen, das an den Gasdruckspeicher angeschlossen ist. Zum Ein- und Ausschalten der Flüssiggaszufuhr wird bevorzugt ein Magnetventil eingesetzt, das vor dem Stromteiler in der Flüssiggasleitung angeordnet ist.

Mit der erfindungsgemäßen Vorrichtung wird erreicht, daß ohne großen apparativen Aufwand jederzeit expandiertes Kältemittel entsprechend dem Bedarf zur Verfügung gestellt werden kann. Ein Abschalten der Flüssiggaszufuhr in Perioden, in denen kein Kältemittel benötigt wird, führt nicht zu Verstopfungen von Düsenbohrungen so daß nach Wiedereinschalten der Flüssiggaszufuhr die Versorgung der Kühlanlage mit expandierendem Kältemittel gewährleistet ist. Es treten keine Verstopfungen auf, die zu einer ungleichmäßigen Verteilung des expandierten Kältemittels führen würden.

Um eine spezielle Anpassung des Kältemittelangebots an den jeweiligen Bedarf, insbesondere eine gleichmäßige Verteilung des Kaltemittels, zu erreichen, ist gemäß einer Weiterbildung des Erfindungsgedankens vorgesehen, daß die vom Stromteiler zu der Expansionsöffnung führende Zweigleitung so in einem Kaltgasführungsrohr endet, daß die Expansionsöffnung innerhalb des Kaltgasführungsrohres angeordnet ist. Zweckmäßigerweise sind mehrere Expansionsöffnungen in Form von Bohrungen in der Zweigleitung angebracht. Die Expansionsöffnungen sind bevorzugt im Schwerpunkt des Kaltgasführungsrohres positioniert, das zweckmäßigerweise zwei offene Enden aufweist, über die das expandierte Kältemittel gleichmäßig verteilt abgegeben wird. An den Enden des Kaltgasführungsrohres ist vorteilhafterweise zur Strahlaufspreizung des abgegebenen Kältemittelstrahles jeweils eine Seitennut angebracht. In einer besonders bevorzugten Ausführungsform weist das Kaltgasführungsrohr in Nähe der Expansionsöffnungen der Zweigleitung mindestens eine Ejektorbohrung auf, über die Sekundäratmosphäre, beispielsweise aus dem Gefrierraum, in das Kaltgasführungsrohr angesaugt wird. Dadurch wird das expandierte Kältemittel feinst verteilt und an den Verbraucher, z.B.

2

einen Kühl- oder Gefrierraum abgegeben. Beim Einsatz von flüssigem Kohlendioxid handelt es sich beispielsweise beim expandierten Kältemittel um Kohlendioxidschnee und Kohlendioxidkaltgas. Der Kohlendioxidschnee wird im Kaltgasführungsrohr feinst verteilt und mit dem Kohlendioxidkaltgas sowie der angesaugten Sekundäratmosphäre vermischt. Das entstehende Zweiphasengemisch wird gleichmäßig verteilt an den Kühl- oder Gefrierraum abgegeben.

Gemäß einer besonders bevorzugten Ausführungsform ist die Flüssiggasleitung größtenteils innerhalb des zu kühlenden Raumes, d.h. beim Einsatz der Erfindung in Kühl- oder Gefrierräumen innerhalb des Kühl- oder Gefrierraumes, angeordnet, um Wärmeverluste zu minimieren. Beispielsweise kann der Flüssiggastank innerhalb des Kühl- oder Gefrierraumes oder unmittelbar neben dem Kühl- oder Gefrierraum untergebracht sein, wobei eine möglichst kurze Zuleitung vom Flüssiggastank zum Kühl- oder Gefrierraum vorgesehen ist.

Um Funktionsstörungen durch auftretendes Tauwasser zu vermeiden wird weiterhin vorgeschlagen, unter den außerhalb des Kühl- oder Gefrierraums angeordneten Anlagenteilen einen Tauwassersammelraum anzuordnen, der ein Tauwasserablaufrohr zum Abzug des Tauwassers aufweist.

Mit der erfindungsgemäßen Vorrichtung wird eine Optimierung der Kältemittelführung, insbesondere bei der Verwendung von flüssigem Kohlendioxid, erreicht. Während bei herkömmlichen Vorrichtungen beispielsweise bei der Expansion von flüssigem Kohlendioxid Verstopfungsprobleme durch Kohlendioxidschnee auftreten können, ermöglicht die erfindungsgemäße Vorrichtung einen störungsfreien Dauer- oder Intervallbetrieb. Die Vorrichtung ist raumsparend und kommt weitgehend mit handelsüblichen Bauteilen aus. Darüber hinaus sind Montage- und Reparaturarbeiten erleichtert. Insgesamt bietet die Erfindung eine wirtschaftliche und zuverlässige Expansionsvorrichtung, die expandiertes Kältemittel jederzeit bedarfsgerecht zur Verfügung stellen kann.

Die erfindungsgemäße Vorrichtung eignet sich zur Expansion und Verteilung aller denkbaren verflüssigten Gase, z.B. flüssigen Stickstoffs, flüssigen Sauerstoffs, flüssigen Wasserstoffs etc.. Ihre größten Vorteile spielt die Erfindung bei der Verwendung von flüssigem Kohlendioxid aus, da es gerade hier auf eine zuverlässige Verhinderung von Verstopfungen durch Kohlendioxidschnee und eine gleichmäßige Verteilung des Kohlendioxidschnees und gasförmigen Kohlendioxids als Kältemittel ankommt. Mit der erfindungsgemäßen Vorrichtung werden diese Probleme auf elegante und apparativ wenig aufwendige Weise gelöst.

Die Vorrichtung ist unter anderem zur Kaltgasinertisierung, z.B. von Lebensmitteln vorgesehen. Auch eine Kaltgas-Luftgemischeinstellung, z.B. in Kühl- oder Gefrierräumen, ist möglich. Die Erfindung eignet sich außerdem zur Ausfällung von Schadstoffen aus Abgasen. Hierzu werden beispielsweise die Abgase durch einen Gefrierraum geleitet, der mittels der erfindungsgemäßen Expansionsvorrichtung beispielsweise mit Kohlendioxidkaltgas und Kohlendioxidschneepartikeln beaufschlagt wird. Die Schadstoffe frieren aus dem Abgas aus und können als Feststoffe z.B. mittels eines Zyklons vom Abgas abgetrennt werden. Darüber hinaus ist es möglich, expandiertes Flüssiggas, insbesondere gasförmiges Kohlendioxid und Kohlendioxidschnee, in Flüssigkeiten oder Partikelmassenströmen zum Stoff- und/oder Energieaustausch einzuleiten. Insgesamt bietet sich der Erfindung ein weites Anwendungsspektrum in der Umwelt- und Entsorgungstechnik sowie in der Kälte- und Gefriertechnik.

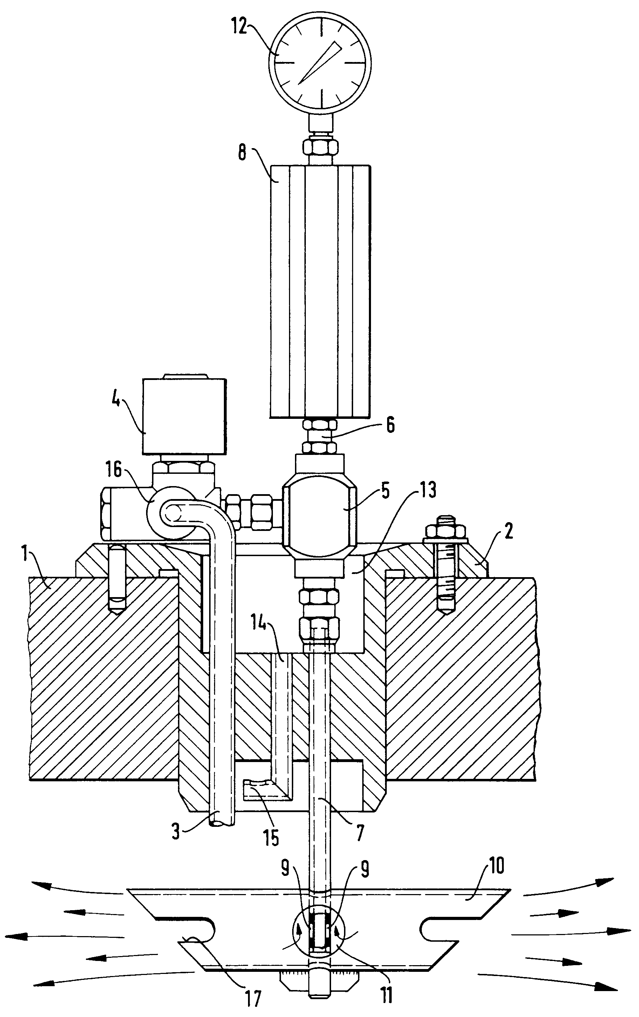

Im folgenden soll die Erfindung anhand eines in der Figur schematisch dargestellten Ausführungsbeispiels näher erläutert werden.

Die in der Figur gezeigte Expansionsvorrichtung ist zum Kühlen eines Gefrierraumes mittels Kohlendioxidschnee und Kohlendioxidkaltgas vorgesehen. Im Gefrierraum können beispielsweise Lebensmittel tiefgefroren werden. In der Figur ist lediglich ein Teil der Gerfierraumdecke 1 dargestellt. In einer Aussparung der Gefrierraumdecke 1 ist eine Durchführung 2 angebracht, die die Expansionsvorrichtung aufnimmt. Die Expansionsvorrichtung wird von einer Flüssiggasleitung 3 mit flüssigem Kohlendioxid gespeist. Das flüssige Kohlendioxid ist in einem in der Figur nicht dargestellten Flüssiggastank gespeichert, der unmittelbar neben dem Gefrierraum untergebracht ist. Der Flüssiggastank ist über eine Zuleitung mit dem Inneren des Gefrierraums verbunden. Die Flüssiggasleitung 3 ist innerhalb des Gefrierraums an diese vom Flüssiggastank kommende Zuleitung angeschlossen und ist zur Verringerung von Wärmeverlusten größtenteils innerhalb des Gefrierraums verlegt. Die Flüssiggasleitung 3 tritt durch die Durchführung 2 hindurch und endet an einer Flüssiggaseinspeisung 16 in ein unmittelbar über der Durchführung 2 angeordnetes Magnetventil 4. Mit dem Magnetventil 4 kann die Flüssiggaszufuhr entsprechend dem jeweiligen Kältemittelbedarf gesteuert werden. Das Magnetventil 4 steht mit einem Stromteiler 5 in Verbindung, der den Flüssiggasstrom in zwei Zweigleitungen 6 und 7 aufteilt. Die Zweigleitung 6 führt zu einem Gasdruckspeicher 8, während die Zweigleitung 7 durch die Durchführung 2 hindurch in das Innere des Gefrierraums eintritt.

Am Ende der Zweigleitung 7 sind mehrere Expansionsbohrungen 9 angebracht, über die flüssiges Kohlendioxid expandiert zur Ausbildung von Kohlendioxidschnee und Kohlendioxidkaltgas. Die Expansionsbohrungen 9 sind im Schwerpunkt eines nach beiden Seiten offenen Kaltgasführungsrohres 10 positioniert. In Nähe der Expansionsbohrungen 9 ist eine Ejektorbohrung 11 im Kaltgasführungsrohr 10 angebracht, über die Sekundäratmosphäre aus dem Gefrierraum angesaugt wird. Das Kaltgasführungsrohr 10 weist an seinen beiden Enden jeweils eine Seitennut 17 zur Strahlaufspreizung des Kohlendioxidschnee- und Kaltgasstrahls auf.

Der Gasdruckspeicher 8 ist mit einem Rippenrohrverdampfer ausgerüstet. Auf diese Weise kann ohne großen apparativen Aufwand durch Verdampfen des dem Gasdruckspeicher 8 zugeführten flüssigen Kohlendioxids ein vorgewählter Systemdruck hergestellt und aufrechterhalten werden. Zur Überwachung des Systemdrucks weist der Gasdruckspeicher 8 ein Druckmeßgerät 12 auf. Der Gasdruckspeicher 8 sorgt dafür, daß auch nach Abschalten der Flüssiggaszufuhr durch Schließen des Magnetventils 4 das flüssige Kohlendioxid in der Zweigleitung 7 bis zur völligen Entleerung in einem oberhalb des Tripelpunktes von Kohlendioxid liegenden Druckbereich gehalten wird, wodurch eine Kohlendioxidschneebildung in der Zweigleitung 7 und dadurch entstehende Verstopfungen der Expansionsbohrungen 9 vermieden werden. Mit dem Gasdruckspeicher 8 können auch Druckschwankungen ausgeglichen werden, so daß der erforderliche Expansionsdruck stets garantiert ist.

In der Durchführung 2 ist ein Tauwassersammelraum 13 eingebettet, der das Tauwasser von den oberhalb der Gefrierraumdecke 1 angeordneten Anlagenteilen aufnimmt. Der Tauwassersammelraum 13 weist ein Tauwasserablaufrohr 14 mit einem Siphonverschluß 15 auf.

Die Funktionsweise der Vorrichtung ist folgende:
Nach Öffnen des Magnetventils 4 strömt flüssiges Kohlendioxid entsprechend dem Anlagendruck durch den Stromteiler 5 und die Zweigleitung 7 zu den Expasionsbohrungen 9, über die der Kohlendioxidflüssigstrom unterhalb des Tripelpunktes von Kohlendioxid (5,18 bar) gegen die Atmosphäre innerhalb des Kaltgasführungsrohres 10 entspannt wird. Durch diesen Vorgang einschließlich der Anordnung und Auslegung des Kaltgasführungsrohres 10 arbeitet die Vorrichtung als Strahlsauger, der über die entsprechend angeordnete Ejektorbohrung 11 Sekundäratmosphäre aus dem Gefrierraum einzieht, den durch Entspannung erzeugten Kohlendioxidschnee feinst verteilt und ihn mit dem Kohlendioxidkaltgasanteil als Zweiphasengemisch von ca. - 78 °C an den Gefrierraum abgibt. Gleichzeitig mit Öffnen des Magnetventils 4 lädt sich der Gasdruckspeicher 8 auf. Nach Schließen des Magnetventils 4 hält der Gasdruckspeicher 8 das flüssige Kohlendioxid in der Zweigleitung 7 entsprechend seinem Speichervolumen bis zur vollständigen Entleerung der Flüssiggasleitung 3 in einem über dem Tripelpunkt des Kohlendioxids liegenden Druckbereich. Hierdurch wird eine Kohlendioxidschneebildung in der Zweigleitung 7 vermieden, so daß keine Verstopfung der Expansionsbohrungen 9 auftritt und somit nach Wiederöffnen des Magnetventils 4 eine gleichmäßige Verteilung des Kältemittels gewährleistet ist.

**Patentansprüche**

1. Vorrichtung zum Entspannen eines verflüssigten Gases mit einer Flüssiggasleitung und mindestens einer damit in Verbindung stehenden Expansionsöffnung, dadurch gekennzeichnet, daß die Flüssiggasleitung (3) mit einem Stromteiler (5) in Verbindung steht, der den Flüssiggasstrom in zwei Zweigleitungen (6, 7) aufteilt, wobei die eine Zweigleitung (6) in einem Gasdruckspeicher (8) endet, während die andere Zweigleitung (7) die Expansionsöffnung (9) zum Entspannen des verflüssigten Gases aufweist.

2. Vorrichtung nach Anspruch 1, dadurch gekennzeichnet, daß der Gasdruckspeicher (8) einen Rippenrohrverdampfer aufweist.

3. Vorrichtung nach Anspruch 1 oder 2, dadurch gekennzeichnet, daß der Gasdruckspeicher (8) mit einem Druckmeßgerät (12) versehen ist.

4. Vorrichtung nach einem der Ansprüche 1 bis 3, dadurch gekennzeichnet, daß in der Flüssiggasleitung (3) vor dem Stromteiler (5) ein Absperrorgan (4) angeordnet ist.

5. Vorrichtung nach einem der Ansprüche 1 bis 4, dadurch gekennzeichnet, daß die Expansionsöffnung (9) innerhalb eines Kaltgasführungsrohres (10) angeordnet ist.

6. Vorrichtung nach Anspruch 5, dadurch gekennzeichnet, daß die Expansionsöffnung (9) im Schwerpunkt des Kaltgasführungsrohres (10) angeordnet ist.

7. Vorrichtung nach Anspruch 5 oder 6, dadurch gekennzeichnet, daß das Kaltgasführungsrohr (10) an seinen Enden jeweils eine Seitennut (17) zur Strahlaufspreizung aufweist.

8. Vorrichtung nach einem der Ansprüche 5 bis 7, dadurch gekennzeichnet, daß das Kaltgasführungsrohr (10) in Nähe der Expansionsöffnung (9) mindestens eine Ejektorbohrung (11) zum Ansaugen von Sekundäratmosphäre in das Kaltgasführungsrohr (10) aufweist.

9. Vorrichtung nach einem der Ansprüche 1 bis 8, dadurch gekennzeichnet, daß die Flüssiggasleitung (3) größtenteils innerhalb eines Kühl- oder Gefrierraumes verlegt ist.

10. Vorrichtung nach einem der Ansprüche 1 bis 9, dadurch gekennzeichnet, daß unterhalb des Stromteilers (5) ein Tauwassersammelraum (13) angeordnet ist, der ein Tauwasserablaufrohr (14) zum Abzug des Tauwassers aufweist.